# FASCICULE DE BREVET EUROPEEN

(11) **EP 0 493 244 B1**
(45) Date de publication et mention de la délivrance du brevet: **05.07.1995**
(21) Numéro de dépôt: 91403525.8
(22) Date de dépôt: 23.12.1991
(51) Int. Cl.: F21S 1/10, F21V 21/10, E01F 9/011

(54) **Pied de lampadaire solaire**
Fuss einer mit Solarenergie gespeisten Aussenleuchte
Foot of a solar powered outdoor luminaire

(30) Priorité: 27.12.1990 FR 9016315
(43) Date de publication de la demande: 01.07.1992
(73) Titulaire: SORELEC, F-45500 Saint Jean de Braye (Loiret) (FR)
(72) Inventeur: Djelouah, Salah, F-Saint Denis de l'Hôtel (Loiret) (FR)
(74) Mandataire: Cabinet HERRBURGER

(56) Documents cités:
- DE-A- 2 253 552
- FR-A- 2 280 859
- GB-A- 2 160 962
- US-A- 4 528 786
- L'USINE NOUVELLE no. 17, 26 Avril 1984, PARIS 'LE PHOTOVOLTAIQUE DESCEND DANS LA RUE'

## Description

La présente invention concerne un pied de lampadaire solaire formé d'un boîtier contenant les batteries et muni d'un logement traversé par le mât du lampadaire.

Un tel lampadaire est déjà connu et installé.

Les difficultés des lampadaires solaires résident dans l'emplacement des batteries.

La solution apparemment la plus simple consisterait à installer les batteries à proximité du capteur solaire, à l'endroit où se trouve également le système d'éclairage. Toutefois, cette solution est difficilement envisageable en pratique à cause du poids des batteries et du renforcement que nécessiterait le mât du lampadaire.

Une autre solution, apparemment simple, mais à écarter, consisterait à installer les batteries dans un logement dans le sol. Cette solution n'est pas possible à cause des infiltrations d'eau qui se produiraient nécessairement.

La seule solution envisageable actuellement et d'ailleurs utilisée pour le pied de lampadaire connu, consiste à installer les batteries au pied du mât dans un boîtier de protection à la fois mécanique et contre les actes de vandalisme, de vol, etc...

De manière plus précise, actuellement pour installer un lampadaire solaire, on réalise dans le sol un massif en béton sur lequel on fixe un support pour le mât. Puis on met en place le boîtier destiné à recevoir les batteries, boîtier qui fait, le cas échéant, partie d'un élément de mobilier urbain, c'est-à-dire qu'il comporte soit des bacs à plantes en partie haute, soit qu'il constitue un élément de piètement de banc, etc...

Ce boîtier, destiné à être fixé au massif, comporte un passage traversant pour le mât. Lorsque le boîtier est mis en place, on installe le mât en l'introduisant à travers le passage du boîtier puis on fixe le mât à son moyen de fixation du massif en béton.

Cette réalisation présente un certain nombre d'inconvénients. Il faut tout d'abord, au moment de l'installation du lampadaire, introduire le mât à travers le passage réalisé dans le boîtier. Cette opération est relativement délicate car il faut aligner le mât sur cet orifice (ce dernier doit être aussi réduit que possible), ce qui oblige à soulever le mât, à l'orienter, l'aligner puis le laisser descendre à travers le boîtier et enfin le fixer au massif.

Un autre inconvénient réside dans la relative faiblesse de la fixation de l'extrémité inférieure du mât ; cet endroit, difficilement accessible, rouille et fragilise la fixation.

Enfin, un autre inconvénient est que pour remplacer un boîtier détérioré (par exemple par un véhicule), il faut procéder de manière inverse au montage, c'est-à-dire détacher le mât, le soulever pour l'extraire du boîtier, enlever le boîtier, le remplacer par un nouveau boîtier puis remettre en place le mât.

Une solution connue présentant les inconvénients précités est décrite dans "L'usine Nouvelle, N° 17, 26/04/1984, Paris, -le photovoltaïque descend dans la rue-" ; par ailleurs un système de fixation est décrit dans US-A-4 528 786.

La présente invention a pour but de remédier aux inconvénients des solutions connues et se propose de créer un pied de lampadaire qui soit d'une réalisation facile, puisse se mettre en place très simplement au pied d'un lampadaire solaire pour recevoir les batteries et qui puisse en même temps, le cas échéant, servir de partie de mobilier urbain.

A cet effet, l'invention est caractérisée par la revendication 1.

Le pied de lampadaire selon l'invention présente l'avantage de se mettre en place après la fixation du mât du lampadaire. Dans ces conditions, le mât peut être fixé de manière traditionnelle. Il peut également s'agir d'un mât traditionnel que l'on transforme en lampadaire solaire. Le changement d'un boîtier et son remplacement soit parce qu'il a été abîmé, soit parce que l'élément de mobilier urbain qu'il constitue doit être modifié, se font sans difficulté et surtout sans qu'il ne soit nécessaire d'enlever le mât.

Le fait de réaliser le couvercle, également comme un boîtier ou partie du boîtier qui, soit ferme le logement du mât réalisé dans l'autre partie du boîtier ou qui complète ce logement, celui de la première partie n'entourant pas complètement le mât, peut être une solution intéressante pour réduire les dimensions de chaque partie de boîtier ou permettre la réalisation de formes relativement compliquées.

Ainsi, la première partie et la seconde partie du boîtier formant couvercle comportent toutes deux un logement recevant au moins une partie du mât et la réunion des deux parties du boîtier ferme le logement du mât.

Suivant une autre caractéristique, le boîtier présente un fond ouvert et le pied comprend un socle auquel se fixe le boîtier. Le couvercle peut se fixer soit sur le boîtier, soit sur le boîtier et sur le socle ou uniquement au socle. Le couvercle est fixé de manière protégée par une serrure.

Suivant une autre caractéristique, le logement de la première partie du boîtier et/ou le logement du couvercle sont en forme de U.

Suivant une autre caractéristique, le couvercle recouvre tout un côté du boîtier ; ce couvercle peut également comporter une languette dont la forme correspond au contour de l'élément de mobilier qui vient coiffer le boîtier proprement dit et comporte lui aussi une ouverture pour lui permettre d'être emmanchée sur le mât.

Enfin, l'élément venant sur le boîtier peut être constitué de deux réceptacles venant s'engager de manière complémentaire sur le mât.

La présente invention sera décrite ci-après de manière plus détaillée à l'aide de deux exemples de réalisation représentés schématiquement dans les dessins annexés dans lesquels :
- la figure 1 montre en vue en perspective éclatée un premier exemple de réalisation d'un pied de lampadaire selon l'invention,
- la figure 1A montre le socle,
- la figure 1B montre le boîtier,
- la figure 1C montre le couvercle,
- la figure 1D montre le réceptacle placé au-dessus du boîtier.
- les figures 2 à 9 montrent un autre exemple de réalisation de pieds de lampadaire.

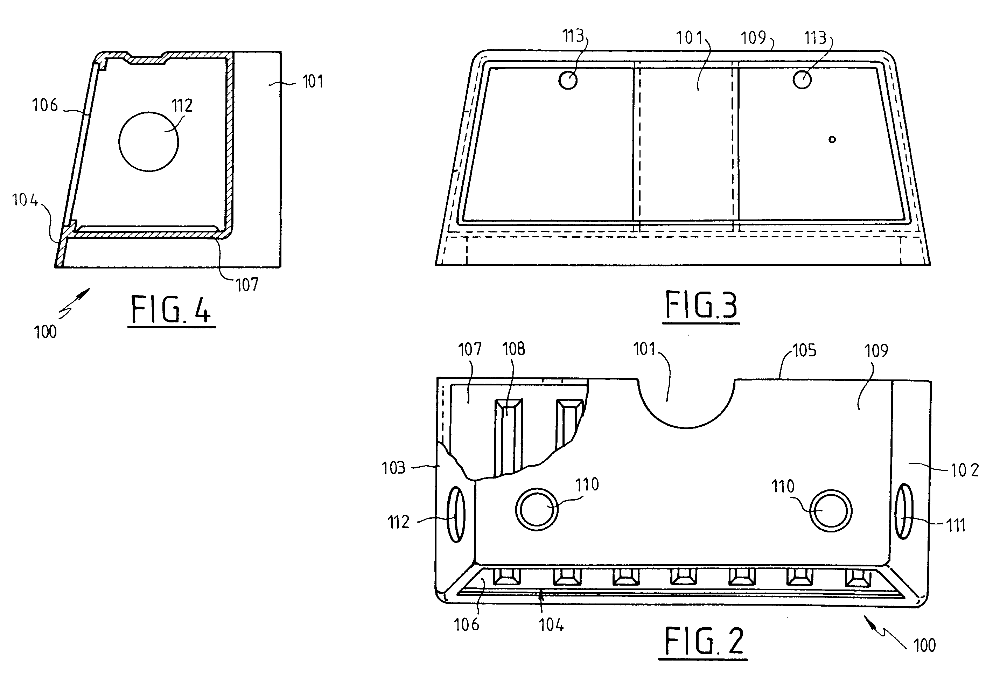

- la figure 2 est une vue de dessus d'une première partie de boîtier.
- la figure 3 est une vue de face correspondant à la figure 2.

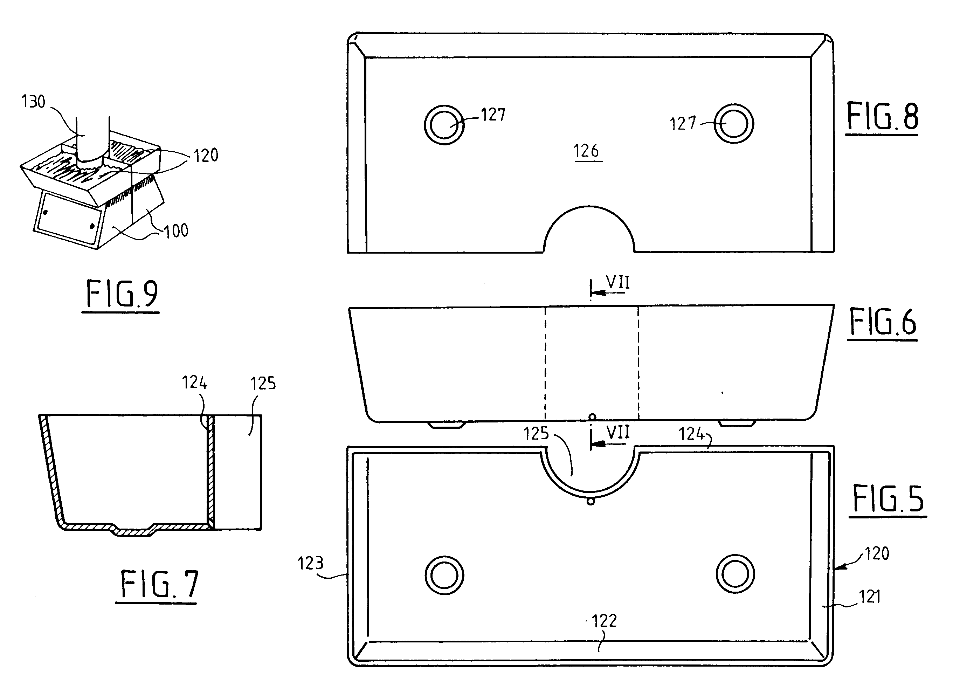

- la figure 4 est une vue de côté, coupée, correspondant aux figures 2 et 3.
- la figure 5 est une vue de dessus d'un réceptacle destiné à venir sur le boîtier des figures 2 à 4.
- la figure 6 est une vue de face du réceptacle de la figure 5.
- la figure 7 est une vue en coupe, selon VII-VII de la figure 6,
- La figure 8 est une vue de dessus du réceptacle de la figure 2,
- La figure 9 est une vue schématique du boîtier et du réceptacle, selon les figures 2 à 8, placées autour d'un mât.

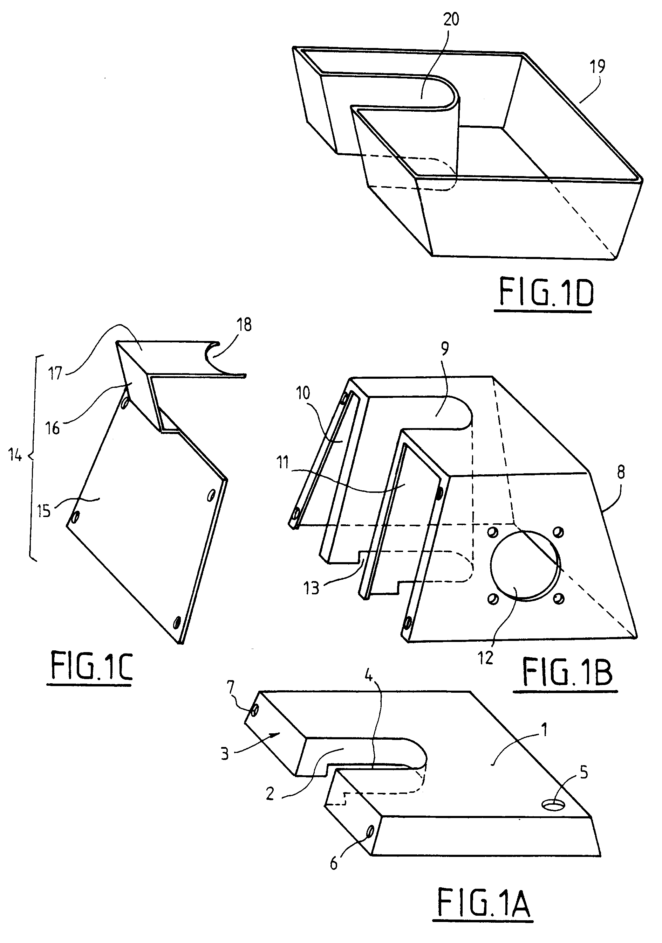

Le pied de lampadaire, représenté à la figure 1, se compose d'un socle 1 en forme de tronc de pyramide, par exemple en matière plastique. Ce socle comporte un logement 2 en forme de U ouvert vers le côté 3 du socle. Le socle présente également un décrochement 4 qui apparaît dans le logement 2 et permet de placer le socle sur la platine rectangulaire ou carrée, non représentée, sur laquelle est fixé le mât.

Le socle 1 comporte également un orifice de fixation 5 qui permet de relier le socle à un moyen d'ancrage prévu dans le sol, ainsi que des orifices 6 sur son côté 3 pour la mise en place du boîtier et/ou du couvercle.

La figure 1B montre le boîtier ou première partie du boîtier 8. Ce boîtier 8 présentant une forme de pyramide tronquée adaptée à la forme du socle 1 est, de préférence, réalisé en matière plastique comme le socle 1. De manière à correspondre au logement 2 du socle 1, le boîtier 8 comporte un logement 9 de même section que celle du logement 2. Sur sa face gauche, le boîtier est muni de deux ouvertures 10, 11 qui donnent accès à l'intérieur du boîtier par exemple pour la mise en place, l'entretien ou le remplacement des batteries placées à cet endroit. Sur une autre face, le boîtier 8 est muni d'un orifice 12 recevant une douille de ventilation ou d'aération.

Comme le boîtier 8 vient coiffer le socle 1, il comporte au niveau de la partie inférieure du logement 9, également un décrochement 13 pour venir coiffer la platine du mât préalablement installé.

La figure 1C montre le couvercle 14 du boîtier 8. Ce couvercle se compose d'une plaque 15 venant coiffer les ouvertures 10, 11 du boîtier 8 et fermer le logement 9. En même temps, ce couvercle est muni d'un prolongement 16 et d'une seconde partie de couvercle 17 adaptée à la forme du logement du réceptacle (figure 1D) et se terminant par une découpe 18 adaptée à la section du lampadaire.

La figure 1D montre le réceptacle 19 qui se place sur le boîtier 8 et constitue par exemple un bac à plantes. Ce réceptacle 19 est également muni d'un logement 20 de forme correspondant à celle du logement 9 du boîtier 8 et de celui du socle 1.

La partie supérieure du logement 1 est fermée par la partie 17 du couvercle 14.

Le boîtier et ses différents accessoires ou éléments complémentaires sont de préférence réalisés en matière plastique.

Le second mode de réalisation du pied de lampadaire, représenté aux figures 2 à 9, se distingue du premier mode de réalisation principalement par la suppression du socle, c'est-à-dire son intégration au boîtier et la réalisation du boîtier en deux parties venant se placer symétriquement sur le mât.

Les figures 2, 3, 4 montrent une première partie de boîtier 100 comportant un logement cylindrique 101 de section semi-circulaire qui sera complété par le logement de l'autre élément de boîtier (non représenté). Comme précédemment le boîtier présente une forme de pyramide tronquée, avec trois faces inclinées 102, 103, 104 et une face verticale 105 située dans le plan de jonction des deux parties de boîtier. La face 104 est ouverte et, par une fenêtre 106, qui laisse apparaître le fond 107 rigidifié par des nervures moulées 108. La face supérieure 109 comporte deux cavités 110 qui servent d'éléments de positionnement de la partie de réceptacle venant se placer sur cette partie de boîtier, et qui est représentée aux figures 5 à 8.

Les faces 102, 103 de la partie de boîtier 100 comportent des orifices 111, 112 recevant des grilles pour servir de moyens de ventilation de l'intérieur du boîtier. La fenêtre 106 se ferme par un couvercle non représentée.

La face 105 (figure 3) est munie de deux orifices 113, 114 qui permettent de relier l'une à l'autre les deux parties de boîtier 100, après leur mise en place sur le mât non représenté.

La vue en coupe de la figure 4 montre que le fond 107 de la partie de boîtier 100, est situé à une certaine hauteur du bord inférieur du boîtier et tient lieu de socle pour que les batteries ne reposent pas directement au niveau du sol et risquent d'être mouillées par les eaux de pluie ou eau d'arrosage.

Le réceptacle constituant une partie de bac à fleurs qui se place sur la partie de boîtier 100, est représenté aux figures 5 à 8. Ce réceptacle 120 comporte des parois 121, 122, 123 inclinées et une paroi 124 verticale placée dans le plan de jonction de deux réceptacles. Le logement 125 pour le mât est réalisé dans la paroi 124.

Le fond 126 du boîtier est muni de deux plots de positionnement 127 qui viennent se placer dans les cavités 110 du boîtier 100.

La figure 9 montre l'ensemble des deux parties de boîtier 100, 100 et deux parties de réceptacle 120, 120 placées autour d'un mât 130 pour en constituer le pied.

## Revendications

1. Pied de lampadaire solaire formé d'un boîtier contenant les batteries et muni d'un logement traversé par le mât du lampadaire, caractérisé en ce que le boîtier est formé :
- d'au moins une première partie (8) et le logement (9) du mât est ouvert latéralement sur le côté du boîtier pour lui permettre d'être engagé sur le mât déjà mis en place,
- d'un couvercle (14) qui se solidarise au boîtier pour fermer l'ouverture latérale du logement (9) et emprisonne le mât,
le couvercle (14) constituant également une seconde partie de boîtier pour fermer et/ou compléter les ouvertures (10, 11) de la première partie (8) du boîtier.

2. Pied de lampadaire, selon la revendication 1, caractérisé en ce que la première partie (8) et la seconde partie (14) du boîtier formant couvercle comportent toutes deux un logement (9, 18) recevant au moins une partie du mât et la réunion des deux parties du boîtier ferme le logement du mât.

3. Pied de lampadaire, selon l'une quelconque des revendications 1 ou 2, caractérisé en ce que le boîtier (8) présente un fond ouvert.

4. Pied de lampadaire, selon l'une quelconque des revendications 1 à 3, caractérisé en ce qu'il comporte un socle (1) auquel se fixe le boîtier (8) et/ou le couvercle (14).

5. Pied de lampadaire, selon la revendication 1, caractérisé en ce que le logement (9) de la première partie (8) et/ou celui du couvercle (14) du boîtier sont en forme de U.

6. Pied de lampadaire, selon la revendication 1, caractérisé en ce que le couvercle (14) recouvre tout un côté du boîtier (8).

7. Pied de lampadaire, selon l'une quelconque des revendications 1 à 6, caractérisé en ce qu'il comporte un réceptacle (19) qui se place sur le boîtier, ce réceptacle ayant lui-même un logement ouvert (20) sur le côté pour s'emmancher sur le mât.

8. Pied de lampadaire, selon la revendication 7, caractérisé en ce qu'il comporte deux réceptacles (120) venant s'engager de manière complémentaire sur le mât (130).

9. Pied de lampadaire, selon la revendication 1, caractérisé en ce que le boîtier est formé de deux parties (100) comportant chacune un logement cylindrique (101) dont la réunion correspond à la section du boîtier.

10. Pied de lampadaire, selon l'une quelconque des revendications 1 et 9, caractérisé en ce que le boîtier (8, 100) comporte un socle (107) faisant corps avec lui.

## Claims

1. Foot of a solar-powered outdoor luminaire, formed by a box containing the batteries and provided with a housing traversed by the post of the outdoor luminaire, which foot is characterised in that the box is formed:
- by at least one first part (8), and the housing (9) for the post is open laterally on the side of the box in order to enable it to be engaged around the post already put in place;
- by a cover (14) which is connected to the box in order to close the lateral opening of the housing (9) and encloses the post, the cover (14) also constituting a second box part for closing and/or completing the openings (10, 11) in the first part (8) of the box.

2. Foot of an outdoor luminaire, according to Claim 1, characterised in that the first part (8) and the second part (14) of the box forming a cover both comprise a housing (9, 18) receiving at least part of the post, and the joining-together of the two parts of the box closes the housing for the post.

3. Foot of an outdoor luminaire, according to either one of Claims 1 and 2, characterised in that the box (8) has an open bottom.

4. Foot of an outdoor luminaire, according to any one of Claims 1 to 3, characterised in that it comprises a base plate (1) to which the box (8) and/or the cover (14) is/are fastened.

5. Foot of an outdoor luminaire, according to Claim 1, characterised in that the housing (9) of the first part (8) and/or that of the cover (14) of the box is/are in the shape of a U.

6. Foot of an outdoor luminaire, according to Claim 1, characterised in that the cover (14) surrounds the whole of one side of the box (8).

7. Foot of an outdoor luminaire, according to any one of Claims 1 to 6, characterised in that it comprises a receptacle (19) which is placed on top of the box, this receptacle itself having a housing (20) open on the side for fitting around the post.

8. Foot of an outdoor luminaire, according to Claim 7, characterised in that is comprises two receptacles (120) which engage complementarily around the post (130).

9. Foot of an outdoor luminaire, according to Claim 1, characterised in that the box is formed by two parts (100), each comprising a cylindrical housing (101), which when joined together correspond to the cross-section of the box.

10. Foot of an outdoor luminaire, according to either of Claims 1 and 9, characterised in that the box (8, 100) comprises a base plate (107) integrally formed therewith.

## Patentansprüche

1. Fuß einer mit Solarenergie gespeisten Außenleuchte, der aus einem Batterien enthaltenden und mit einer Aufnahme, die den Außenleuchtenmast enthält, versehenen Gehäuse gebildet ist, dadurch gekennzeichnet, daß das Gehäuse aus
- mindestens einem ersten Teil (8) besteht, und die Aufnahme (9) des Mastes seitlich auf der Seite des Gehäuses offen ist, damit sie mit dem bereits aufgestellten Mast in Eingriff gebracht werden kann,
- einer Abdeckung (14) besteht, die zum Schließen der seitlichen Öffnung der Aufnahme (9) fest mit dem Gehäuse verbunden ist und den Mast umschließt,
wobei die Abdeckung (14) des weiteren einen zweiten Gehäuseteil zum Schließen und/oder Komplettieren der Öffnungen (10, 11) des ersten Gehäuseteils (8) bildet.

2. Fuß einer Außenleuchte nach Anspruch 1, dadurch gekennzeichnet, daß sowohl der erste Teil (8) als auch der zweite Teil (14) des die Abdeckung bildenden Gehäuses eine Aufnahme (9, 18) enthalten, die mindestens einen Teil des Masts aufnimmt, und die Verbindung der beiden Gehäuseteile die Aufnahme des Masts schließt.

3. Fuß einer Außenleuchte nach Anspruch 1 oder 2, dadurch gekennzeichnet, daß das Gehäuse (8) einen offenen Boden aufweist.

4. Fuß einer Außenleuchte nach einem der Ansprüche 1 bis 3, dadurch gekennzeichnet, daß er einen Sockel (1) enthält, an dem das Gehäuse (8) und/oder die Abdeckung (14) befestigt sind.

5. Fuß einer Außenleuchte nach Anspruch 1, dadurch gekennzeichnet, daß die Aufnahme (9) des ersten Teils (8) und/oder der Abdeckung (14) des Gehäuses U-förmig sind.

6. Fuß einer Außenleuchte nach Anspruch 1, dadurch gekennzeichnet, daß die Abdeckung (14) eine ganze Seite des Gehäuses (8) bedeckt.

7. Fuß einer Außenleuchte nach einem der Ansprüche 1 bis 6, dadurch gekennzeichnet, daß er einen Behälter (19) enthält, der an dem Gehäuse positioniert ist, wobei dieser Behälter selbst an der Seite eine offene Aufnahme (20) aufweist, damit der Mast eingelassen werden kann.

8. Fuß einer Außenleuchte nach Anspruch 7, dadurch gekennzeichnet, daß er zwei Behälter (120) enthält, die auf komplementäre Weise am Mast (130) in Eingriff gebracht werden.

9. Fuß einer Außenleuchte nach Anspruch 1, dadurch gekennzeichnet, daß das Gehäuse aus zwei Teilen (100) besteht, die jeweils eine zylindrische Aufnahme (101) enthalten, deren Verbindung dem Gehäuseabschnitt entspricht.

10. Fuß einer Außenleuchte nach einem der Ansprüche 1 bis 9, dadurch gekennzeichnet, daß das Gehäuse (8, 100) einen Sockel (107) enthält, der damit einstückig ausgebildet ist.
